# EUROPEAN PATENT APPLICATION

(11) **EP 1 643 499 A2**
(43) Date of publication of application: **05.04.2006**
(21) Application number: 05255564.6
(22) Date of filing: 10.09.2005
(51) Int. Cl.: G11B 17/028

(54) **Disc recording/reproducing apparatus and a method for controlling the same**

(30) Priority: 30.09.2004 KR 2004077870
(71) Applicant: Samsung Electronics Co., Ltd., Suwon-si, Gyeonggi-Do (KR)
(72) Inventor: Bae, Won-youl, Gweonseon-gu Suwon-si, Gyeonggi-do (KR)
(74) Representative: Robinson, Ian Michael

(57) **Abstract**

A disc recording/reproducing apparatus, and a method of controlling the same, the recording/reproducing apparatus including a turn table (30) rotatably provided to a spindle motor (20) to seat a disc; a chucking unit (50) to fix the disc seated on the turn table (30); a driving unit (40) to move the disc between a disc-chucking position and a disc-releasing position; and a controlling unit (60) to control a driving speed of the driving unit (40) according to a position of the disc.

## Description

The present invention relates to a disc recording/reproducing apparatus and a controlling method for the same.

Generally, a disc recording/reproducing apparatus used to record and/or reproduce information with respect to a disc may be one of such apparatuses as, for example, a compact disc-read only memory (CD-ROM) driver, a video disc device, a digital audio disc device, and a digital versatile disc (DVD) player.

Such a disc recording/reproducing apparatus comprises a disc tray moving in and out with respect to a main body of the apparatus to thereby load and eject a disc, a turn table on which to seat the loaded disc, a chucking unit to fix the disc seated on the turn table, a spindle motor to rotate the turn table together with the disc, and an optical pickup to record and/or reproduce information with respect to the disc being rotated.

The chucking unit is fixed to an upper part of the main body. Therefore, an ascending/descending unit to elevate the turn table, spindle motor, and optical pickup up to the chucking unit is provided, thereby enabling the disc to be chucked between the turn table and the chucking unit.

The ascending/descending unit comprises an ascending/descending lever mounted in the main body to move up and down, a cam slider slidably mounted in the main body to move the ascending/descending lever, a driving motor to selectively move the cam slider, and a plurality of gears. The ascending/descending lever supports the spindle motor, which supports the turn table, and the optical pickup.

According to the structure described above, when the disc received in the disc tray is loaded into the main body, the cam slider is moved in a certain direction by the driving motor, thereby elevating the ascending/descending lever. Accordingly, the spindle motor and the turn table, which are supported by the ascending/descending lever, are lifted together, so that the loaded disc can be rotatably chucked between the chucking unit and the turn table.

Conversely, in order unload the disc, the cam slider is moved in the opposite direction by the driving motor. The ascending/descending lever is lowered, and, accordingly, the spindle motor and the turn table are lowered together, and the chucking unit is released from the turn table. Therefore, the disc placed back on the disc tray. By withdrawing the disc tray, the disc can be unloaded from the apparatus.

However, in a conventional disc recording/reproducing apparatus having the structure described above, the driving motor is driven constantly until the cam slider reaches a certain limit because an elevating distance of the ascending/descending lever is not determined. Therefore, even while the disc is being fixed or released by the chucking unit, the normal operation of the driving motor moving the ascending/descending lever is maintained, generating excessive noise.

An aim of the present invention is to address the above and/or other problems and/or disadvantages, and to provide advantages as described below. Accordingly, an aspect of the present invention is to provide a disc recording/reproducing apparatus capable of reducing noise generated when a disc is loaded and unloaded, and a method of controlling the same.

Additional aspects and/or advantages of the invention will be set forth in part in the description which follows and, in part, will be apparent from the description, or may be learned by practice of the invention.

According to the present invention there is provided an apparatus and method as set forth in the appended claims. Preferred features of the invention will be apparent from the dependent claims, and the description which follows.

In one aspect of the present invention there is provided a disc recording/reproducing apparatus comprising a turn table rotatably provided to a spindle motor to seat a disc; a chucking unit to fix the disc seated on the turn table; a driving unit to move the disc between a disc-chucking position and a disc-releasing position; and a controlling unit to control a driving speed of the driving unit according to a position of the disc.

The controlling unit may comprise a sensor part to detect the position of the disc between the disc-chucking position and the disc-releasing position; and a controller to vary a speed of the driving unit according to a signal, denoting the position of the disc, received from the sensor part.

The sensor part may comprise a first sensor to detect the disc-chucking position; and a second sensor to detect the disc-releasing position and a predetermined position adjacent to the disc-chucking position. The first and second sensors may both be activated in the disc-chucking position

The controller may selectively increase or decrease the driving speed of the driving unit between the disc-chucking unit and the adjacent position.

The controller may gradually increase the speed of the driving unit in response to the disc moving from the disc-chucking position to the adjacent position.

The controller may gradually decrease the speed of the driving unit in response to the disc moving from the adjacent position to the disc-chucking position.

The first and second sensors may each comprise an on/off switch operated according to the position of the disc.

The driving unit may comprise an ascending/descending member to support the spindle motor, provided to move vertically in a main body of the apparatus; a cam slider slidably mounted to the main body to vertically move the ascending/descending member; and a driving motor to supply power to move the cam slider.

The controlling unit may comprise a sensor part to detect a position of the cam slider between the disc-chucking position and the disc-releasing position; and a controller to vary a speed of the driving unit according to a signal, denoting the position of the cam slider, received from the sensor part.

The sensor part may comprise a first sensor to detect the cam slider at the disc-chucking position; and a second sensor to detect the cam slider at the disc-releasing position and a predetermined position adjacent to the disc-chucking position. The first and second sensors may both be activated in the disc-chucking position.

The controller may gradually increase the speed of the driving motor while moving the cam slider from the disc-chucking position to the adjacent position.

The controller may gradually decrease the speed of the driving motor while moving the cam slider from the adjacent position to the disc-chucking position.

The first and second sensors may each comprise an on/off switch operated in association with the movement of the cam slider.

The cam slider may comprise a first interference part to interact with the first sensor in response to moving in and out of the disc-chucking position; a second interference part to interact with the second sensor in response to moving in and out of the disc-releasing position; and a third interference part to interact with the second sensor in response to moving in and out of the adjacent position.

The first and the second sensors may be disposed substantially adjacent to each other and perpendicularly to a motional direction of the cam slider.

In order to achieve another aspect of the present invention, there is provided a method of controlling a disc recording/reproducing apparatus, the method comprising loading a disc onto a turn table, chucking the loaded disc, releasing the chucked disc to a loading position, and controlling variably a speed of moving the disc in at least one of the chucking the loaded disc and the releasing the chucked disc.

The chucking the loaded disc may comprise moving the disc at a first predetermined speed up to a predetermined position in which the disc is adjacent to a disc-chucking position; and decreasing the speed of moving the disc to a second predetermined speed from the adjacent position to the disc-chucking position.

The chucking the loaded disc may further comprise detecting the disc moving to the adjacent position and thereby determining whether to decrease the speed of moving the disc.

The releasing the chucked disc may comprise moving the disc at a first predetermined speed in response to the disc moving from the disc-chucking position to a predetermined position adjacent to the disc-chucking position; and increasing the speed of moving the disc to a second predetermined speed in response to the disc moving from the adjacent position.

The releasing the chucked disc may further comprise detecting the released disc moving to the adjacent position and thereby determining whether to increase the speed of moving the disc.

In order to achieve another aspect of the present invention, there is provided a disc recording/reproducing apparatus comprising a sensing unit to determine a position of a disc; and a controlling unit to variably control a speed of moving the disc to and from a chucked position according to a signal received from the sensing unit.

The controlling unit may decrease the speed of moving the disc to the chucked position in response to the disc being in a position adjacent to the chucked position, and may increase the speed of moving the disc from the chucked position in response to the disc moving from a position adjacent to the chucked position.

The sensing unit may comprise a first sensor to determine the disc is in the chucked position, and a second sensor to determine the disc is in a position adjacent to the chucked position.

The disc recording/reproducing apparatus may further comprise a driving unit to move the disc to and from the chucked position, a first interference part provided on the driving unit to interact with the first sensor; and a second interference part provided on the driving unit to interact with the second sensor.

The disc recording/reproducing apparatus may further comprise a third interference part provided on the driving unit to interact with the second sensor; wherein the second sensor determines the disc is in a released position according to the interaction with the third interference part.

The first and second sensors may be sensitive to contact with, or proximity to, the first and second interference parts, respectively.

In order to achieve another aspect of the present invention, there is provided a method of controlling a disc recording/reproducing apparatus, the method comprising sensing a position of a disc; and variably controlling a speed of moving the disc to and from a chucked position according to the sensed position of the disc.

The variably controlling the speed may comprise decreasing the speed of moving the disc to the chucked position in response to the disc being in a position adjacent to the chucked position, and increasing the speed of moving the disc form the chucked position in response to the disc moving from a position adjacent to the chucked position.

The sensing the position of the disc may comprise determining the disc is in the chucked position with a first sensor; and determining the disc is in a position adjacent to the chucked position with a second sensor.

The method may further comprise moving the disc to and from the chucked position with a driving unit having first and second interference parts; determining the disc is in the chucked position due to an interaction between the first sensor and the first interference part; and determining the disc is in the adjacent position due to an interaction between the second sensor and the second interference part.

The method may further comprise determining the disc is in a released position according to an interaction between the second sensor and a third interference part of the driving unit.

These and/or other aspects and advantages of the invention will become apparent and more readily appreciated from the following description of the embodiments, taken in conjunction with the accompanying drawings of which:
Figure 1A is a plane view schematically illustrating a disc recording/reproducing apparatus according to an embodiment of the present invention;
Figure 1B is a plane view schematically illustrating a disc being chucked in the embodiment illustrated in Figure 1A;
Figures 2A and 2B are side views illustrating the actions of the disc being chucked and released, respectively, in the disc recording/reproducing apparatus according to an embodiment of the present invention;
Figures 3A through 3C are plane views schematically illustrating different stages of the disc-chucking operation according to an embodiment of the present invention;
Figure 4 is a flowchart illustrating a method of controlling the disc recording/reproducing apparatus according to an embodiment of the present invention;
Figure 5 is a flowchart illustrating a disc-chucking operation of Figure 4;
Figure 6 is a graph illustrating the disc-chucking operation of Figure 5;
Figure 7 is a flowchart illustrating a disc-releasing operation of Figure 4; and
Figure 8 is a graph illustrating the disc-releasing operation of Figure 7.

Reference will now be made in detail to the embodiment of the present invention, examples of which are illustrated in the accompanying drawings, wherein like reference numerals refer to the like elements throughout. The embodiments are described below to explain the present invention by referring to the figures.

In the following description, drawing reference numerals may be repeated to describe repeated elements in different drawings. Some matters may be defined in the description along with a detailed construction, however, these elements are merely provided to assist in a comprehensive understanding of the invention. Thus, it is apparent that the present invention may be carried out without those particularly described elements. Also, well-known functions or constructions may not be described in detail, so as to not obscure the invention in unnecessary detail.

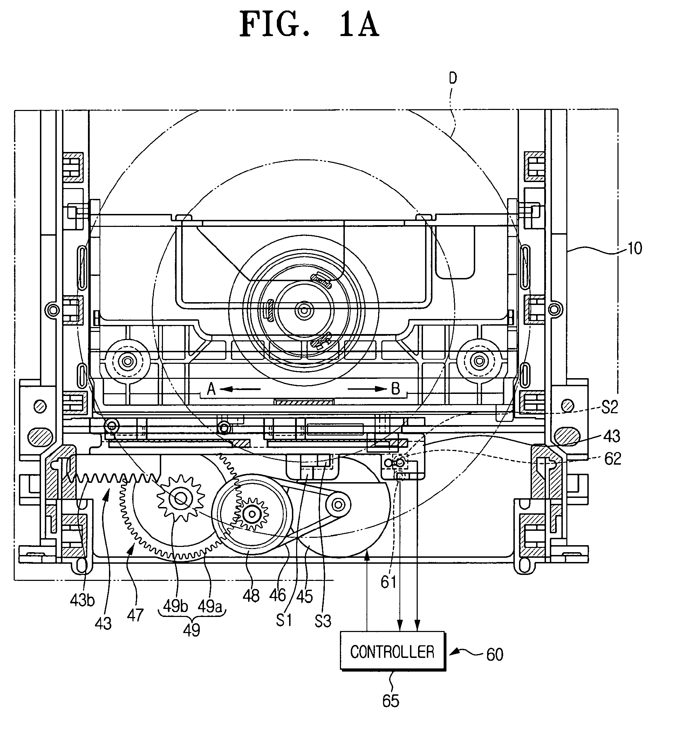

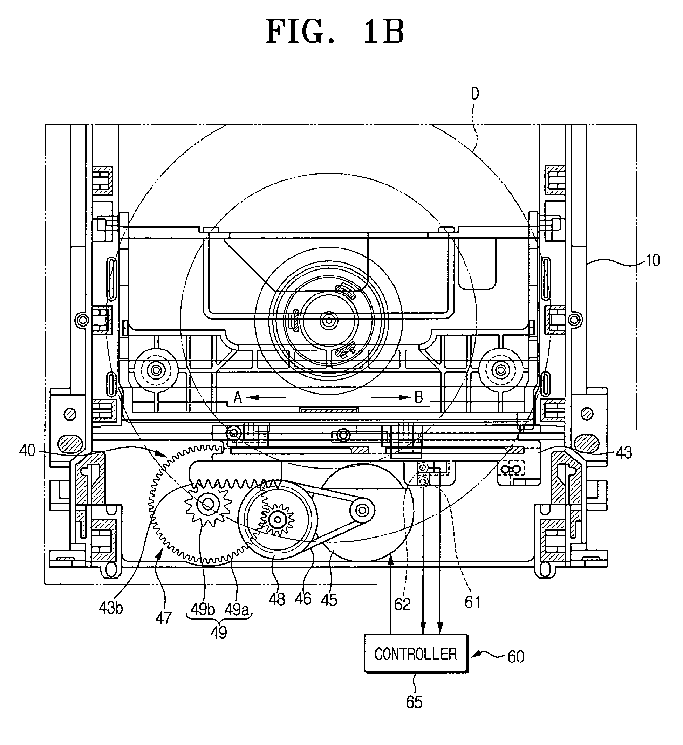

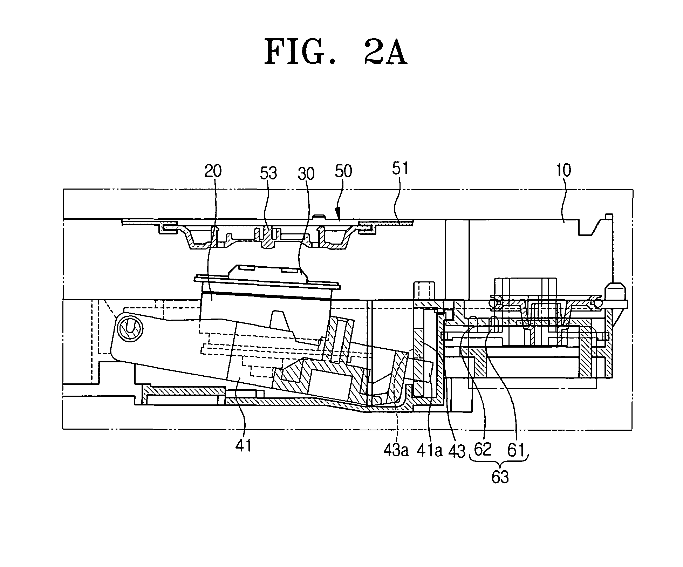

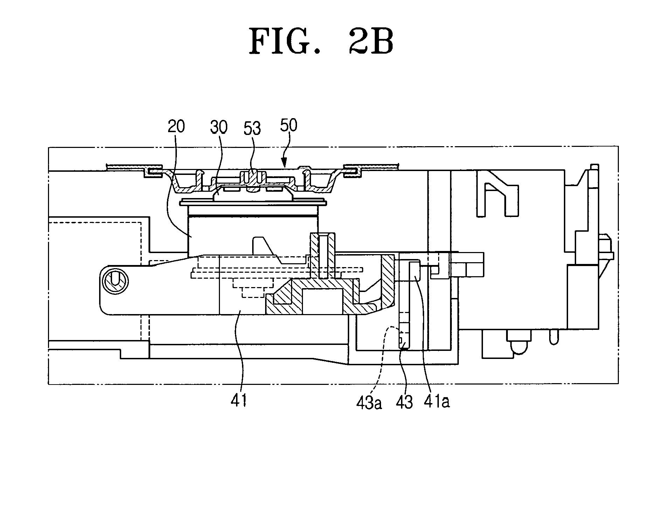

Referring to Figures 1A, 1B, 2A, and 2B, a disc recording/reproducing apparatus according to an embodiment of the present invention comprises a main body 10, a turn table 30 supported by a spindle motor 20, a driving unit 40 to elevate and lower the turn table 30, a chucking unit 50, and a controlling unit 60.

The main body 10 includes a movable disc tray (not shown) to receive a disc. The disc tray (not shown) is moved in and out of the main body 10 by the driving unit 40. Since the structure of the disc tray is generally known, a detailed description thereof will be omitted.

A disc D, being received in the disc tray and loaded in the main body 10, is seated on the turn table 30. The turn table 30 is rotatably supported by the spindle motor 20. The turn table 30 is disposed under the chucking unit 50.

The chucking unit 50 comprises a supporting bracket 51 connected to an upper part of the main body 10, and a clamper 53 movably mounted to the supporting bracket 51. The clamper 53 extends toward the turn table 30 to clamp the disc D on the turn table 30. Therefore, the disc D chucked between the clamper 53 and the turn table 30 can be rotated integrally with the turn table 30 and the clamper 53.

The driving unit 40 comprises an ascending/descending member 41 to support the spindle motor 20, a cam slider 43 which moves in association with the ascending/descending member 41, a driving motor 45, and a power transmitter 47.

Referring to Figures 2A and 2B, one end of the ascending/descending member 41 is movably supported by the main body 10, while the other end is connected to the cam slider 43 to move in association with the cam slider 43. The ascending/descending member 41 has a guide pin 41a. Figures 1A and 2A illustrate stages of the ascending/descending member 41 being elevated, or, in other words, the disc D being chucked. Figures 1B and 2B illustrate stages of the ascending/descending member 41 being lowered, or, in other words, the disc D being released from the chucking unit 50.

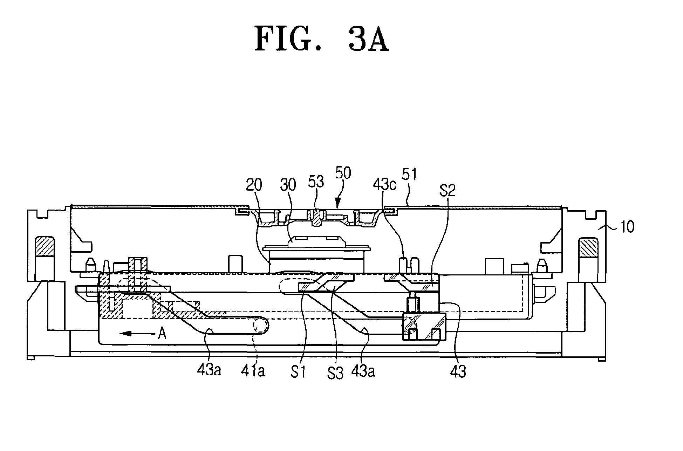

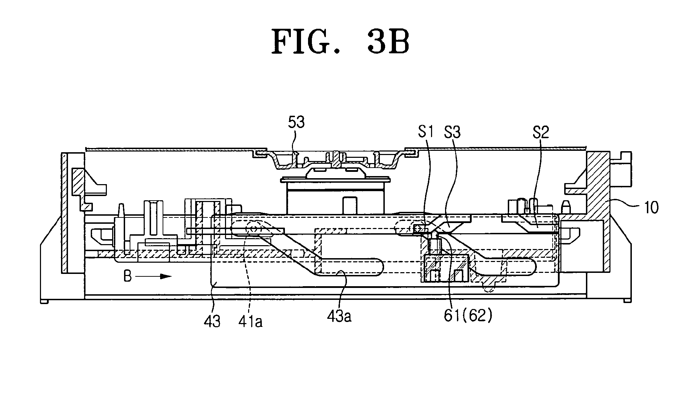

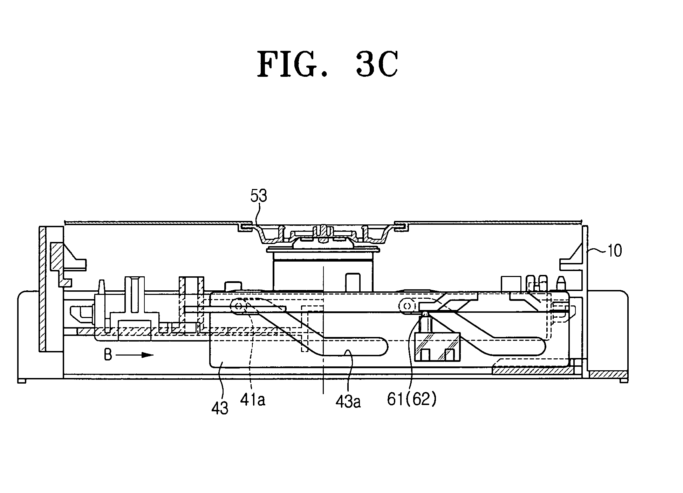

Referring to Figures 3A through 3C, the cam slider 43 is slidably mounted in the main body 10. When the cam slider 43 is moved a predetermined distance in a direction of 'A', as shown in Figure 3A, the disc D is in a released state. When the cam slider 43 is moved a predetermined distance in a direction of 'B', as shown in Figure 3B, the disc D is about to be chucked. Figure 3C illustrates a state in which the disc D is completely chucked, as the cam slider 43 is moved another predetermined distance in the 'B' direction.

The cam slider 43 has a cam slit 43a to receive of the guide pin 41a of the ascending/descending member 41. Also, the cam slider 43 has a rack gear part 43b thereof, which is selectively connected and separated with respect to the loading gear 49 that will be described hereinbelow.

A cam projection 43c is provided on the cam slider 43. The cam projection 43c is selectively guided by the disc tray being loaded and unloaded, thereby enabling connection and separation of the rack gear part 43b with respect to the loading gear 49.

The cam slider 43 comprises first to third interference parts s1 to s3. The first and the second interference parts s1 and s2 are provided at a predetermined distance from each other. The third interference part s3 is disposed between the first and the second interference parts s1 and s2, preferably, though not necessarily, near the first interference part s1. The interference parts s1 to s3 will be described in greater detail hereinbelow.

The driving motor 45 is mounted in the main body 10 to supply power to allow a reciprocating motion of the cam slider 43 and a loading/unloading operation of the disc tray.

The power transmitter 47 comprises a pulley gear 48 connected to the driving motor 45 through a belt 46, and a loading gear 49 operated in association with the pulley gear 48. The loading gear 49 comprises a driving gear part 49a coupled to the pulley gear 48, and a driving gear part 49b coupled to the rack gear part 43b.

The controlling unit 60 comprises a sensor part 63 to detect a disc-chucking position and a disc-releasing position, and a controller 65 to control a driving speed.

The sensor part 63 comprises first and second sensors 61 and 62 to respectively detect the disc-chucking position and the disc-releasing position by sensing a shift of the cam slider 43. The first and the second sensors 61 and 62 are preferably, though not necessarily, implemented by an on/off switch disposed to interact with the interference parts s1 to s3 of the cam slider 43. Therefore, the first and the second sensors 61 and 62, while approximately adjacent to each other, are arranged perpendicularly to a motional direction of the cam slider 43.

The first sensor 61 senses the disc-chucking position, that is, completion of the chucking operation, as shown in Figures 1B, 2B and 3C. The second sensor 62 senses the disc-releasing position, that is, completion of the releasing operation, as well as a position adjacent to the disc-chucking position. Therefore, predetermined shifts of distance of the disc D can be detected by cooperation of the first and the second sensors 61 and 62.

As shown in Figures 1A and 3A, when the cam slider 43 is moved in the 'A' direction by a predetermined distance, the second sensor 62 detects the second interference part s2, and is thereby switched on while the first sensor 61 is switched off. At this time, the controller 65 monitors signals transmitted from the sensors 61 and 62, and determines that the disc D is released.

In Figure 3B, the second sensor 62 is in an on-state due to interaction with the third interference part s3, while the first sensor 61 is in an off-state. Therefore, the controller 65 determines that the disc D is in the position that is adjacent to the disc-chucking position, and may decrease the speed of the driving motor 45.

As shown in Figures 1B and 3C, when the cam slider 43 is moved in the 'B' direction by a predetermined distance, both the first and the second sensors 61 and 62 interact with the first and the third interference parts s1 and s3, thereby being switched on. Therefore, the controller 65 determines that the disc D is chucked, and stops the driving of the driving motor 45.

Accordingly, the disc D can be detected in both the disc-chucking position and the disc-releasing position, as well as another position adjacent to the disc-chucking position, through the sensors 61 and 62. In other words, time points before and after the disc D is chucked can be detected using the sensors 61 and 62.

In addition, the controller 65 controls the driving direction and speed of the driving motor 45 based on the position of the disc D, which is detected by the sensors 61 and 62.

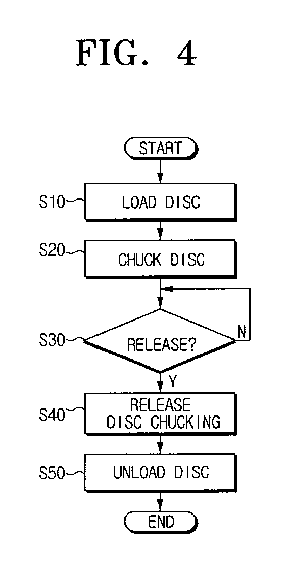

Hereinbelow, a method of controlling the disc recording/reproducing apparatus according to an embodiment of the present invention will be described with reference to Figures 4 through 6.

First, the disc tray (not shown) is inserted in the main body 10 by the loading gear 49, thereby loading the disc D (S10).

After loading of the disc D, gear connections between the disc tray and the loading gear 49 are released. The disc tray interacts with the cam projection 43c of the cam slider 43, thereby moving the cam slider in the 'B' direction. Therefore, the rack gear part 43b, which is initially separated from the loading gear 49, as shown in Figure 1A, is coupled to the loading gear 49b.

After the disc D is loaded, the controller 65 operates the driving unit 40 to chuck the disc D (S20).

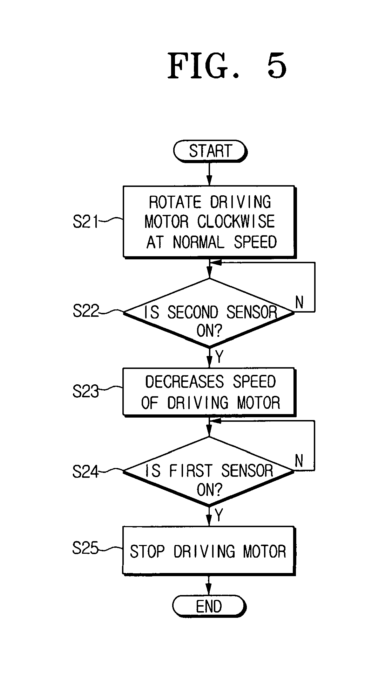

During the disc-chucking operation, the controller 65 rotates the driving motor 45 clockwise at a normal speed, as illustrated in Figures 5 (S21) and 6. In the beginning of the disc-chucking operation, the first sensor 61 is in the off-state, while the second sensor 62 is switched from the on-state to the off-state.

The controller 65 monitors whether the second sensor 62 is turned on again (S22). When the cam slider 43 is moved in the 'B' direction by a predetermined distance to reach the position that is adjacent to the disc-chucking position, as shown in Figure 3B, the third interference part s3 interacts with the second sensor 62. Therefore, the second sensor 62 switches to the on-state.

Then, the controller 65 decreases the speed of the driving motor 45 (S23). Here, the speed of the driving motor 45 may be decreased according to a predetermined deceleration slope, or decreased to a predetermined lowest speed.

As shown in Figure 3C, when the cam slider 43 is moved in the 'B' direction another predetermined distance, the first sensor 61 interacts with the first interference part s1, thereby switching the first sensor 61 to the on-state.

Upon receiving the on-signal from the first sensor 61, the controller 65 determines that the disc D is completely chucked (S24). Therefore, the controller 65 stops the driving motor 45 to finish the disc-chucking operation (S25) .

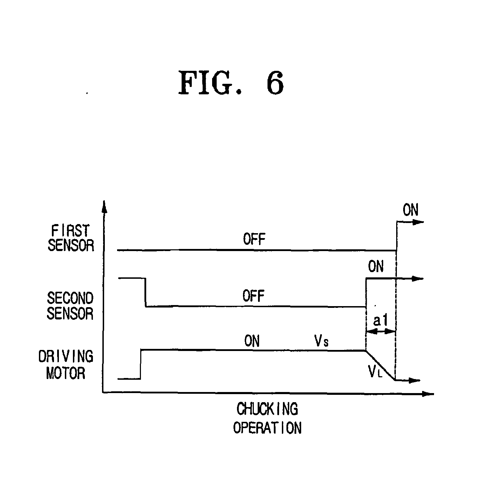

As shown in Figure 6, since the first sensor 61 is turned on when the disc D is chucked, the disc D position adjacent to the disc-chucking position can be detected, and, according to this, the speed of driving motor 45 can be controlled. More specifically, the driving motor 45 is decelerated in an adjacent section a1 in which the first sensor 61 and the second sensor 62 are sequentially turned on. Accordingly, the disc-chucking operation can be smoothly performed. As a result, the noise caused by sudden performance of the disc-chucking operation can be reduced.

The disc D remains in the disc-chucking position until a signal to release the disc D is input. In this position, the turn table 30, the disc D, and the clamper 53 integrally rotate.

Upon receiving the disc-releasing signal (S30), the controller 65 controls the driving unit 40 to perform the disc-releasing operation (S40).

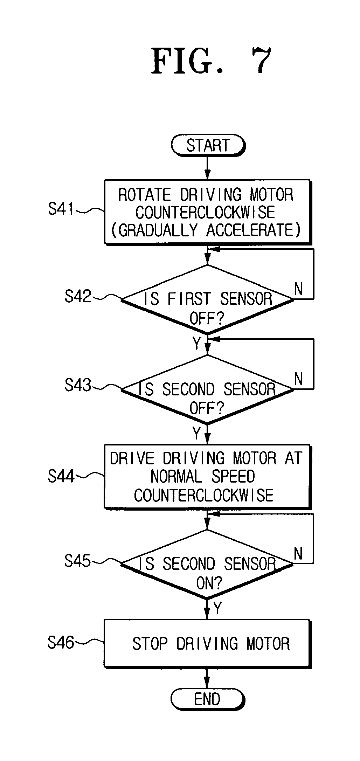

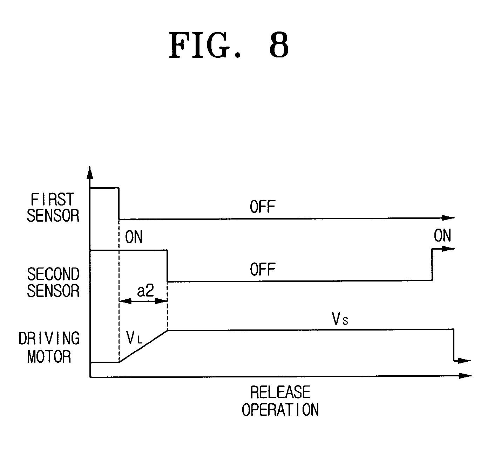

Operation S40 will be described in more detail with reference to Figures 7 and 8 hereinbelow.

In the disc-chucking position, as shown in Figures 1B and 3C, both the first and the second sensors 61 and 62 are in the on-state due to interaction with the first and the third interference parts s1 and s3. When the disc-releasing signal is input, the controller 65 rotates the driving motor 45 counterclockwise at a lower speed than the normal speed (S41). Here, the controller 65 may control the driving motor 45 to be in the lowest speed, or gradually increase the speed from the lowest speed to the normal speed. Thus, by controlling the driving motor 45 to rotate at a lower speed than the normal speed in the beginning of the disc-releasing operation, the noise can be minimized when the chucking unit 50 and the turn table 30 are separated.

While controlling the speed of the driving motor 45, the controller 65 monitors the disc-releasing position using the signals input from the first and the second sensors 61 and 62. More specifically, the controller 65 confirms that the first sensor 61 is turned off when the driving motor 45 is initially driven (S42). Then, as shown in Figure 3B, the controller 65 determines when the second sensor 62 ceases to interact with the third interference part s3 and is switched off (S43).

As described above, when releasing the disc D, the controller 65 drives the driving motor 45 at variable speeds other than the normal speed until the first sensor 61 and the second sensor 62 are sequentially turned off. If a signal denoting the off-state of the second sensor 62 is input in operation S43, the controller 65 determines that the disc has moved beyond the adjacent position from the disc-chucking position. From this time, the controller 65 drives the driving motor 45 at the normal speed (S44).

As shown in Figures 1A, 2A and 3A, when the cam slider 43 moves a predetermined distance in the `A' direction, the second sensor 62 interacts with the second interference part s2, thereby being switched on. Then, the controller 65, receiving the on-signal from the second sensor 62, determines that the disc-releasing operation is completed (S45), and stops the driving motor 45 to thereby finish the disc-releasing operation (S46).

As can be appreciated from the above descriptions, using the disc recording/reproducing apparatus and the method of controlling the same according to embodiments of the present invention, the speed of the driving motor 45 can be controlled variably when chucking and releasing the disc D.

As a result, by decelerating the driving motor 45 to below the normal speed between the disc-chucking position and an adjacent position, the disc-chucking operation and the disc-releasing operation can be more gently performed. Accordingly, the noise generated when the disc is suddenly chucked and released can be reduced.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A disc recording/reproducing apparatus comprising:
a spindle motor (20);
a turn table (30) rotatably provided to the spindle motor (20) to seat a disc thereon;
a chucking unit (50) to fix the disc seated on the turn table (30);
a driving unit (40) to move the disc between a disc-chucking position and a disc-releasing position; and
a controlling unit (60) to control a driving speed of the driving unit (40) according to a position of the disc.

2. The disc recording/reproducing apparatus of claim 1, wherein the controlling unit (60) comprises:
a sensor part (63) to detect the position of the disc between the disc-chucking position and the disc-releasing position; and
a controller (65) to vary a speed of the driving unit (40) according to a signal, denoting the position of the disc, received from the sensor part (63).

3. The disc recording/reproducing apparatus of claim 2, wherein the sensor part (63) comprises:
a first sensor (61) to detect the disc-chucking position; and
a second sensor (62) to detect the disc-releasing position and a predetermined position adjacent to the disc-chucking position.

4. The disc recording/reproducing apparatus of claim 3, wherein the first and second sensors (61, 62) are both activated in the disc-chucking position.

5. The disc recording/reproducing apparatus of claim 3 or 4, wherein the controller (65) selectively increases or decreases the driving speed of the driving unit (40) between the disc-chucking position and the adjacent position.

6. The disc recording/reproducing apparatus of claim 3, 4 or 5, wherein the controller (65) gradually increases the speed of the driving unit (40) in response to the disc moving from the disc-chucking position to the adjacent position.

7. The disc recording/reproducing apparatus of claim 3, 4, 5 or 6, wherein the controller (65) gradually decreases the speed of the driving unit (40) in response to the disc moving from the adjacent position to the disc-chucking position.

8. The disc recording/reproducing apparatus of any of claims 3 to 7, wherein each of the first and second sensors (61, 62) comprise an on/off switch operated according to the position of the disc.

9. The disc recording/reproducing apparatus of any preceding claim, wherein the driving unit (40) comprises:
an ascending/descending member (41) to support the spindle motor (20), and provided to move vertically in a main body of the apparatus;
a cam slider (43) slidably mounted to the main body to vertically move the ascending/descending member (41); and
a driving motor (45) to supply power to move the cam slider (43).

10. The disc recording/reproducing apparatus of claim 9, wherein the controlling unit (60) comprises:
a sensor part (63) to detect a position of the cam slider (43) between the disc-chucking position and the disc-releasing position; and
a controller (65) to vary a speed of the driving unit (40) according to a signal, denoting the position of the cam slider (43), received from the sensor part (63).

11. The disc recording/reproducing apparatus of claim 10, wherein the sensor part (63) comprises:
a first sensor (61) to detect the cam slider (43) at the disc-chucking position; and
a second sensor (62) to detect the cam slider (43) at the disc-releasing position and a predetermined position adjacent to the disc-chucking position.

12. The disc recording/reproducing apparatus of claim 11, wherein the first and second sensors (61, 62) are both activated in the disc-chucking position.

13. The disc recording/reproducing apparatus of claim 11 or 12, wherein the controller (65) gradually increases the speed of the driving motor (45) while moving the cam slider (43) from the disc-chucking position to the adjacent position.

14. The disc recording/reproducing apparatus of claim 11, 12 or 13, wherein the controller (65) gradually decreases the speed of the driving motor (45) while moving the cam slider (43) from the adjacent position to the disc-chucking position.

15. The disc recording/reproducing apparatus of any of claims 11 to 14, wherein each of the first and second sensors (61, 62) comprise an on/off switch operated in association with the movement of the cam slider (43).

16. The disc recording/reproducing apparatus of any of claims 11 to 15, wherein the cam slider (43) comprises:
a first interference part (s1) to interact with the first sensor (61) in response to moving in and out of the disc-chucking position;
a second interference part (s2) to interact with the second sensor (62) in response to moving in and out of the disc-releasing position; and
a third interference part (s3) to interact with the second sensor (62) in response to moving in and out of the adjacent position.

17. The disc recording/reproducing apparatus of claim 16, wherein the first and second sensors (61, 62) are disposed substantially adjacent to each other and perpendicularly to a motional direction of the cam slider (43).

18. A method of controlling a disc recording/reproducing apparatus, the method comprising:
loading a disc onto a turn table (30);
chucking the loaded disc;
releasing the chucked disc to a loading position; and
controlling variably a speed of moving the disc in at least one of the chucking the loaded disc and the releasing the chucked disc.

19. The method of claim 18, wherein the chucking the loaded disc comprises:
moving the disc at a first predetermined speed up to a predetermined position in which the disc is adjacent to a disc-chucking position; and
decreasing the speed of moving the disc to a second predetermined speed from the adjacent position to the disc-chucking position.

20. The method of claim 19, wherein the chucking the loaded disc further comprises detecting the disc moving to the adjacent position and thereby determining whether to decrease the speed of moving the disc.

21. The method of claim 18, wherein the releasing the chucked disc comprises:
moving the disc at a first predetermined speed in response to the disc moving from the disc-chucking position to a predetermined position adjacent to the disc-chucking position; and
increasing the speed of moving the disc to a second predetermined speed in response to the disc moving from the adjacent position.

22. The method of claim 21, wherein the releasing the chucked disc further comprises detecting the released disc moving to the adjacent position and thereby determining whether to increase the speed of moving the disc.

23. A disc recording/reproducing apparatus comprising:
a sensing unit (63) to determine a position of a disc; and
a controlling unit (60) to variably control a speed of moving the disc to and from a chucked position according to a signal received from the sensing unit (63).

24. The disc recording/reproducing apparatus of claim 23, wherein the controlling unit (60) decreases the speed of moving the disc to the chucked position in response to the disc being in a position adjacent to the chucked position.

25. The disc recording/reproducing apparatus of claim 23, wherein the controlling unit (60) increases the speed of moving the disc from the chucked position in response to the disc moving from a position adjacent to the chucked position.

26. The disc recording/reproducing apparatus of claim 23, wherein the sensing unit (63) comprises:
a first sensor (61) to determine the disc is in the chucked position; and
a second sensor (62) to determine the disc is in a position adjacent to the chucked position.

27. The disc recording/reproducing apparatus of claim 26, further comprising:
a driving unit (40) to move the disc to and from the chucked position;
a first interference part (s1) provided on the driving unit (40) to interact with the first sensor (61); and
a second interference part (s2) provided on the driving unit (40) to interact with the second sensor (62).

28. The disc recording/reproducing apparatus of claim 27, further comprising:
a third interference part (s3) provided on the driving unit (40) to interact with the second sensor (62);
wherein the second sensor (62) determines the disc is in a released position according to the interaction with the third interference part (s3).

29. The disc recording/reproducing apparatus of claim 27, wherein the first and second sensors (61, 62) are sensitive to contact with the first and second interference parts (s1, s2), respectively.

30. The disc recording/reproducing apparatus of claim 27, wherein the first and second sensors (61, 62) are sensitive to proximity to the first and second interference parts (s1, s2), respectively.

31. A method of controlling a disc recording/reproducing apparatus, the method comprising:
sensing a position of a disc; and
variably controlling a speed of moving the disc to and from a chucked position according to the sensed position of the disc.

32. The method of claim 31, wherein the variably controlling the speed comprises decreasing the speed of moving the disc to the chucked position in response to the disc being in a position adjacent to the chucked position.

33. The method of claim 31, wherein the variably controlling the speed comprises increasing the speed of moving the disc from the chucked position in response to the disc moving from a position adjacent to the chucked position.

34. The method of claim 31, wherein the sensing the position of the disc comprises:
determining the disc is in the chucked position with a first sensor (61); and
determining the disc is in a position adjacent to the chucked position with a second sensor (62).

35. The method of claim 34, further comprising:
moving the disc to and from the chucked position with a driving unit (40) having first and second interference parts (s1, s2);
determining the disc is in the chucked position due to an interaction between the first sensor (61) and the first interference part (s1); and
determining the disc is in the adjacent position due to an interaction between the second sensor (62) and the second interference part (s2).

36. The method of claim 35, further comprising determining the disc is in a released position according to an interaction between the second sensor (62) and a third interference part (s3) of the driving unit (40).

37. The method of claim 35, wherein the first and second sensors (61, 62) are sensitive to contact with the first and second interference parts (s1, s2), respectively.

38. The method of claim 35, wherein the first and second sensors (61, 62) are sensitive to proximity to the first and second interference parts (s1, s2), respectively.
